# EUROPÄISCHE PATENTSCHRIFT

(11) **EP 3 013 624 B1**
(45) Veröffentlichungstag und Bekanntmachung des Hinweises auf die Patenterteilung: **03.04.2019**
(21) Anmeldenummer: 14757861.1
(22) Anmeldetag: 08.08.2014
(51) Int. Cl.: B60L 5/32

(54) **DRUCKLUFTSYSTEM**
COMPRESSED-AIR SYSTEM
SYSTÈME À AIR COMPRIMÉ

(30) Priorität: 02.09.2013 DE 102013217429
(43) Veröffentlichungstag der Anmeldung: 04.05.2016
(73) Patentinhaber: Siemens Mobility GmbH, 81739 München (DE)
(72) Erfinder: TRUPP, Alexander, CH-8400 Winterthur (CH); GLINKA, Martin, 91080 Uttenreuth (DE); KURZ, Matthias, 91054 Erlangen (DE)
(86) Internationale Anmeldenummer: PCT/EP2014/067115
(87) Internationale Veröffentlichungsnummer: WO 2015/028291

(56) Entgegenhaltungen:
- EP-A1- 0 395 504
- AT-B- 388 900
- CN-U- 201 849 328
- DE-A1-102008 056 479

## Beschreibung

Die Erfindung betrifft ein Druckluftsystem mit einem Druckluftspeicher, einem Druckluftleitungssystem und einem über das Druckluftleitungssystem eingangsseitig mit dem Druckluftspeicher verbunden Antriebssystem mit einem Antrieb und einer Antriebssteuerung.

Druckluft kann sowohl als Energieträger als auch zu einer Steuerung von technischen Prozessen verwendet werden. Folglich finden Druckluftsysteme in vielen technischen Gebieten Anwendung. Druckluftspeicherkraftwerke, Druckluftwaffen und Drucklufthämmer sind Beispiele für Systeme, die Druckluft einsetzen.

Im Verkehrswesen, insbesondere bei Schienenfahrzeugen, Omnibussen und Lastkraftwagen, werden beispielsweise Brems- und Federungssysteme verwendet, die mit Druckluft arbeiten. Speziell bei Schienenfahrzeugen wird Druckluft z.B. auch zum Betreiben von Stromabnehmerantrieben verwendet, die zu einem Anheben und/oder Absenken von Stromabnehmern vorbereitet sind.

Viele Druckluftsysteme müssen regelmäßig von außen mit Druckluft versorgt werden. Eine Versorgung mit Druckluft erfolgt oftmals mittels eines elektrisch betriebenen Kompressors. Druckluftsysteme können daher einen hohen Energieverbrauch aufweisen.

Druckluftbasierte Systeme zum Betreiben von Stromabnehmerantrieben von Schienenfahrzeugen sind insbesondere aus den Dokumenten EP0395504A1, AT388900B, DE102008056479A1 sowie CN201849328U bekannt.

Es ist eine Aufgabe der vorliegenden Erfindung, ein Energie sparendes Druckluftsystem anzugeben. Diese Aufgabe wird durch ein Druckluftsystem gemäß Patentanspruch 1 gelöst.

Das erfindungsgemäße Druckluftsystem für ein Schienenfahrzeug weist einen Druckluftspeicher, ein Druckluftleitungssystem und ein über das Druckluftleitungssystem eingangsseitig mit dem Druckluftspeicher verbundenes Antriebssystem mit einem als ein Stromabnehmerantrieb ausgeführten Antrieb zum Anheben und/oder Absenken eines Stromabnehmers des Schienenfahrzeugs in Abhängigkeit eines von einer Antriebssteuerung gesteuerten Eingangsdrucks auf, wobei das Druckluftleitungssystem einen Bypass zwischen dem Druckluftspeicher und dem Antrieb aufweist, der im Zustand der pneumatischen Trennung der Antriebssteuerung von dem Antrieb zu einer Überbrückung der Antriebssteuerung vorbereitet ist. Kennzeichnend weist das Antriebssystem ein pneumatisch gesteuertes Wechselventil auf, das zum pneumatischen Trennen der Antriebssteuerung von dem Antrieb vorbereitet ist, wobei die Antriebssteuerung und der Bypass ausgangsseitig jeweils mit einem Eingang des Wechselventils verbunden sind und ein Ausgang des Wechselventils mit dem Antrieb verbunden ist, und wobei die Antriebssteuerung und der Bypass eingangsseitig jeweils mit einem Ausgang eines Wegeventils verbunden sind, dessen Eingang mit dem Druckluftspeicher verbunden ist.

Die Erfindung geht von der Überlegung aus, dass bei einem Druckluftsystem der eingangs genannten Art über die Antriebssteuerung ein Druckluftverlust auftreten kann, der auf einen von außen hervorgerufenen Überdruck in dem Antrieb zurückzuführen ist.

Bei einem Schienenfahrzeug mit einem Druckluftsystem der eingangs genannten Art und einem Stromabnehmer können beispielsweise durch Wind hervorgerufene Schwingungen einer Strom führenden Leitung einen periodisch auftretenden Überdruck in einem Stromabnehmerantrieb hervorrufen, falls der Stromabnehmer in Kontakt mit der Strom führenden Leitung steht. Der periodisch auftretende Überdruck in dem Stromabnehmerantrieb kann wiederum zu periodischen Druckluftverlusten über die Antriebssteuerung führen.

Weiter geht die Erfindung von der Überlegung aus, dass es Situationen geben kann, in denen zumindest temporär auf ein Steuern des Antriebs mittels der Antriebssteuerung verzichtet werden kann. So ist es beispielsweise bei einem Schienenfahrzeug möglich, dass zumindest temporär ein Steuern des Stromabnehmerantriebs mittels der Antriebssteuerung verzichtbar ist, falls das Schienenfahrzeug abgestellt ist.

Mittels des Wechselventils des Antriebssystems ist es möglich, in Zeitspannen, in denen auf ein Steuern des Antriebs mittels der Antriebssteuerung verzichtet werden kann, den Antrieb pneumatisch von der Antriebsteuerung zu trennen, wodurch ein Druckluftverlust über die Antriebssteuerung erheblich eingeschränkt werden kann. Auf diese Weise kann erreicht werden, dass ein Kompressor dem Druckluftsystem seltener Druckluft zuführen muss und folglich Energie gespart wird.

Durch den Bypass des Druckluftleitungssystems kann im Zustand der pneumatischen Trennung der Antriebssteuerung von dem Antrieb eine Überbrückung der Antriebssteuerung erreicht werden.

Ein Druckluftspeicher kann ein Druckluftbehälter sein, der speziell zu einer Speicherung von Druckluft vorbereitet ist. Vorteilhafterweise ist der Druckluftspeicher außerdem zu einer Versorgung eines oder mehrerer pneumatischer Elemente mit Druckluft vorbereitet. Zweckmäßigerweise ist der Druckluftspeicher mit einem Eingang zum Zuführen von Druckluft, z.B. mittels eines Kompressors, ausgestattet. Weiter ist es zweckmäßig, wenn der Druckluftspeicher mit einem Ausgang zum Versorgen von pneumatischen Elementen mit Druckluft ausgestattet ist.

Unter einer Eingangsseite eines pneumatischen Elements kann diejenige Seite verstanden werden, durch die Druckluft in das pneumatische Element eintritt. Entsprechend kann unter einer Ausgangsseite eines pneumatischen Elements diejenige Seite verstanden werden, aus der Druckluft aus dem pneumatischen Element austritt. Als Eingangsdruck kann der an einem Eingang des Antriebs herrschende Druck aufgefasst werden, der insbesondere an einen Druck im Inneren des Antriebs gekoppelt ist oder gleich dem Druck im Inneren des Antriebs ist.

Unter einem Antrieb kann eine Vorrichtung verstanden werden, die mit Hilfe von Druckluft zum Verrichten mechanischer Arbeit, insbesondere zum Heben von Lasten, vorbereitet ist. Der Antrieb kann zu einer Einnahme von zumindest zwei insbesondere eingangsdruckabhängigen Stellungen vorbereitet sein. Es ist vorteilhaft, wenn der Antrieb zudem zu einer Einnahme kontinuierlicher Zwischenstellungen zwischen den zumindest zwei Stellungen vorbereitet ist. Die Stellungen können z.B. Hubstellungen eines linear beweglichen Antriebs sein.

Eine Antriebssteuerung kann eine Vorrichtung sein, die zum Steuern von Betriebszuständen, insbesondere von Hubstellungen, des Antriebs vorbereitet ist. In bevorzugter Weise ist die Antriebssteuerung über das Steuern des Eingangsdrucks des Antriebs zum Steuern der Betriebszustände des Antriebs vorbereitet. Beispielsweise kann ein Erhöhen des Eingangsdrucks zu einer höheren Hubstellung führen. Umgekehrt kann ein Absenken des Eingangsdrucks zu einer niedrigeren Hubstellung führen. Die Antriebssteuerung kann u.a. ein Drucksteuerventil umfassen.

Weiter ist es vorteilhaft, wenn die Antriebssteuerung zu einem Ablassen von Druckluft vorbereitet ist. Hierdurch wird erreicht, dass der Eingangsdruck des Antriebs abgesenkt werden kann. Es ist besonders vorteilhaft ist, wenn die Antriebssteuerung zum Steuern des Antriebs von einem ersten regulären in einen zweiten regulären Betriebszustand durch das Ablassen von Druckluft vorbereitet ist. Als ein regulärer Betriebszustand des Antriebs kann ein Betriebszustand aufgefasst werden, bei dem der Eingangsdruck des Antriebs unterhalb eines vorgegebenen, insbesondere aus Sicherheitsgründen maximal zulässigen, Wertes ist.

Es ist vorteilhaft, wenn das Druckluftleitungssystem ein weiteres Ventil aufweist. Vorzugsweise ist das Ventil zwischen der Antriebssteuerung und dem Druckluftspeicher, insbesondere unmittelbar hinter dem Ausgang des Druckluftspeichers, angeordnet. Zweckmäßigerweise ist das Ventil zum pneumatischen Trennen der Antriebssteuerung von dem Druckluftspeicher vorbereitet. Hierdurch treten im Zustand der pneumatischen Trennung der Antriebssteuerung von dem Druckluftspeicher eventuelle Druckluftverluste aus dem Druckluftspeicher nicht entlang der gesamten Druckluftleitung zwischen dem Druckluftspeicher und der Antriebssteuerung auf. Dadurch kann erreicht werden, dass Druckluftverluste aus dem Druckluftspeicher, die insbesondere durch Lecks in einer Druckluftleitung zwischen dem Druckluftspeicher und der Antriebssteuerung verursacht werden, reduziert werden. In bevorzugter Weise ist dieses Ventil elektropneumatisch betätigbar.

In einer besonders vorteilhaften Ausgestaltung der Erfindung ist die Antriebssteuerung als eine Regeleinheit ausgeführt. Die Regeleinheit kann einen Sensor aufweisen, der zweckmäßigerweise zum Messen einer Regelgröße des Antriebs vorbereitet ist. Weiter ist es vorteilhaft, wenn die Regeleinheit eine Rückkopplung zu einem Eingang der Regeleinheit aufweist.

Es kann beispielsweise dann sinnvoll sein, die Antriebssteuerung als Regeleinheit auszugestalten, wenn eine Größe, wie z.B. der Eingangsdruck des Antriebs, durch äußere Einflüsse veränderbar ist, jedoch automatisch konstant bzw. annähernd konstant gehalten werden muss.

Beispielsweise muss in einem Stromabnehmerantrieb eines Schienenfahrzeugs ein konstanter Druck herrschen, damit ein von dem Stromabnehmerantrieb angetriebener Stromabnehmer mit einer konstanten Kraft gegen eine Strom führende Leitung gepresst werden kann und ein ununterbrochenen Kontakt des Stromabnehmers mit der Strom führenden Leitung ermöglicht wird.

Da aber wie zuvor angesprochen der Druck in dem Stromabnehmerantrieb durch äußere Einflüsse, wie z.B. durch Schwingungen der Strom führenden Leitung, beeinflusst werden kann, ist es vorteilhaft, wenn die Antriebssteuerung bei einem Schienenfahrzeug als Regeleinheit ausgeführt ist.

Unter einer Regelgröße kann eine messbare Größe aufgefasst werden, zu dessen Regelung die Regeleinheit vorbereitet ist. Die Regelgröße ist vorteilhafterweise der Eingangsdruck des Antriebs. Zweckmäßigerweise ist der Sensor zum Messen des Eingangsdrucks des Antriebs vorbereitet.

Unter einer Rückkopplung kann ein Mechanismus verstanden werden, der zu einer Übertragung eines von der Regelgröße abhängigen insbesondere elektrischen Signals zu einem Eingang der Regeleinheit vorbereitet ist.

In einer vorteilhaften Weiterbildung der Erfindung ist der Stromabnehmerantrieb beispielsweise als ein Luftfederbalg ausgestaltet.

Der Bypass kann eine Hilfssteuerung aufweisen, die vorteilhafterweise zum Steuern des Eingangsdrucks des Antriebs vorbereitet ist. Dadurch kann der Antrieb, insbesondere bei einer Überbrückung der Antriebssteuerung mittels des Bypasses, mit einem einstellbaren Eingangsdruck beaufschlagt werden.

Die Hilfssteuerung kann als ein Druckminderer ausgeführt sein. Ein Vorteil dieser Ausführungsvariante ist, dass über den Druckminderer, insbesondere bei einem Überdruck auf einer Ausgangsseite des Druckminderers, praktisch keine Druckluftverluste auftreten.

Alternativ kann die Hilfssteuerung als ein weiteres Drucksteuerventil ausgeführt sein, das vorteilhafterweise zu einem Ablassen von Druckluft vorbereitet ist. Durch diese Ausführungsvariante kann auf einfache Weise erreicht werden, dass bei Bedarf der Eingangsdruck des Antriebs über die Hilfssteuerung abgesenkt werden kann. Die Hilfssteuerung kann insbesondere als Regeleinheit ausgeführt sein.

Ist die Hilfssteuerung als ein weiteres Drucksteuerventil ausgeführt, das zum Ablassen von Druckluft vorbereitet ist, weist die Hilfssteuerung zweckmäßigerweise eine geringere Steuer- bzw. Regelgenauigkeit als die Antriebssteuerung auf. Auf diese Weise kann erreicht werden, dass über die Hilfssteuerung bei einem von außen hervorgerufenen Überdruck in dem Antrieb geringere Druckluftverluste auftreten, als bei gleichem Überdruck und gleicher Dauer des Überdrucks über die Antriebssteuerung auftreten würden.

Durch den erfindungsgemäßen Einsatz eines Wechselventils kann erreicht werden, dass der Bypass ohne ein zusätzliches Ventil mit dem Antrieb verbindbar ist. Dadurch ist der Bypass insbesondere ausgangsseitig über das Wechselventil mit dem Antrieb verbunden. Weiterhin kann der Bypass insbesondere eingangsseitig über ein Wegeventil mit dem Druckluftspeicher verbunden sein. Dies ermöglicht es, dass das Druckluftleitungssystem derart ausgestaltet ist, dass der Bypass nur bei Bedarf, z.B. im Zustand der pneumatischen Trennung des Antriebs von der Antriebssteuerung, mit Druckluft aus dem Druckluftspeicher versorgt wird.

Durch das erfindungsgemäße Verbinden des Ausgangs des Wechselventils über das Druckluftleitungssystem mit dem Antrieb und Verbinden der zwei Eingänge des Wechselventils mit dem Bypass und der Antriebssteuerung über das Druckluftleitungssystem kann erreicht werden, dass auf einfache Weise von einer Druckluftversorgung des Antriebs über den Bypass zu einer Druckluftversorgung des Antriebs über die Antriebssteuerung gewechselt werden kann.

Zweckmäßigerweise ist der zumindest eine Eingang des Wegeventils über das Druckluftleitungssystem mit dem Druckluftspeicher verbunden. Einer der zumindest zwei Ausgänge des Wegeventils ist vorteilhafterweise mit dem Bypass verbunden. Ein anderer der zumindest zwei Ausgänge des Wegeventils ist vorteilhafterweise über das Druckluftleitungssystem mit der Antriebssteuerung verbunden. Hierdurch kann entweder die Antriebssteuerung oder der Bypass mit Druckluft aus dem Druckluftspeicher versorgt werden.

Ist die Hilfssteuerung als Druckminderer ausgeführt, umfasst der Bypass vorteilhafterweise ein Ablassventil, das zu einem Ablassen von Druckluft aus dem Druckluftleitungssystem, insbesondere aus dem Bypass, vorbereitet ist. In dem Fall, in dem der Druck zwischen dem Druckminderer und dem Wechselventil höher ist als der Druck zwischen der Antriebssteuerung und dem Wechselventil, kann durch das Ablassen von Druckluft über das Ablassventil erreicht werden, dass der Druck zwischen dem Druckminderer und dem Wechselventil einen niedrigeren Wert annimmt als der Druck zwischen der Antriebssteuerung und dem Wechselventil. Dadurch wiederum kann erreicht werden, dass das Wechselventil von einer Druckluftversorgung des Antriebs über die Hilfssteuerung zu einer Druckluftversorgung des Antriebs über die Antriebssteuerung umgeschaltet wird. Vorteilhafterweise ist das Ablassventil elektropneumatisch betätigbar.

In einer vorteilhaften Ausgestaltung der Erfindung ist ein Druckmessgerät über das Druckluftleitungssystem mit dem Antrieb verbunden. Zweckmäßigerweise ist das Druckmessgerät unmittelbar vor einem Eingang des Antriebs angeordnet.

Vorteilhafterweise ist das Druckmessgerät zu einer Übertragung eines insbesondere elektrischen Signals, das von einem mit dem Druckmessgerät gemessenen Druck abhängig ist, an ein weiteres Element vorbereitet. Bei dem weiteren Element kann es sich beispielsweise um ein Anzeigeelement handeln. Dadurch kann erreicht werden, dass Wartungs- und/oder Bedienungspersonal auf bequeme Weise den Eingangsdruck des Antriebs überprüfen kann.

Die Erfindung betrifft außerdem ein Schienenfahrzeug, welches ein erfindungsgemäßes Druckluftsystem aufweist.

Die Erfindung findet besonders vorteilhaft Anwendung beim Abstellen eines Schienenfahrzeugs, bei dem das Schienenfahrzeug bei mit einer Strom führenden Leitung verbundenem Stromabnehmer bis zu seinem Stillstand abgebremst wird. Ein Energie sparendes Abstellen des Schienenfahrzeugs kann dadurch erzielt werden, dass ein Stromabnehmerantrieb durch das erfindungsgemäße Wechselventil von einer Antriebssteuerung pneumatisch getrennt wird und der Stromabnehmer des Schienenfahrzeugs weiterhin in Kontakt mit der Strom führenden Leitung bleibt.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit der erfindungsgemäßen Vorrichtung und dem erfindungsgemäßen Verfahren kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: ein Schaltbild eines Druckluftsystems bekannt aus dem Stand der Technik mit einem Antriebssystem aufweisend ein Stromabnehmerantrieb, eine Antriebssteuerung und ein Ventil,
- FIG 2: ein Schaltbild eines ersten erfinderischen Druckluftsystems mit einem Bypass zwischen einem Druckluftspeicher und einem Stromabnehmerantrieb,
- FIG 3: ein Schaltbild eines zweiten erfinderischen Druckluftsystems mit einem Bypass zwischen einem Druckluftspeicher und einem Stromabnehmerantrieb und
- FIG 4: ein Schaltbild eines alternativen Druckluftsystems mit einem Druckluftspeicher und einem weiteren Druckluftspeicher.

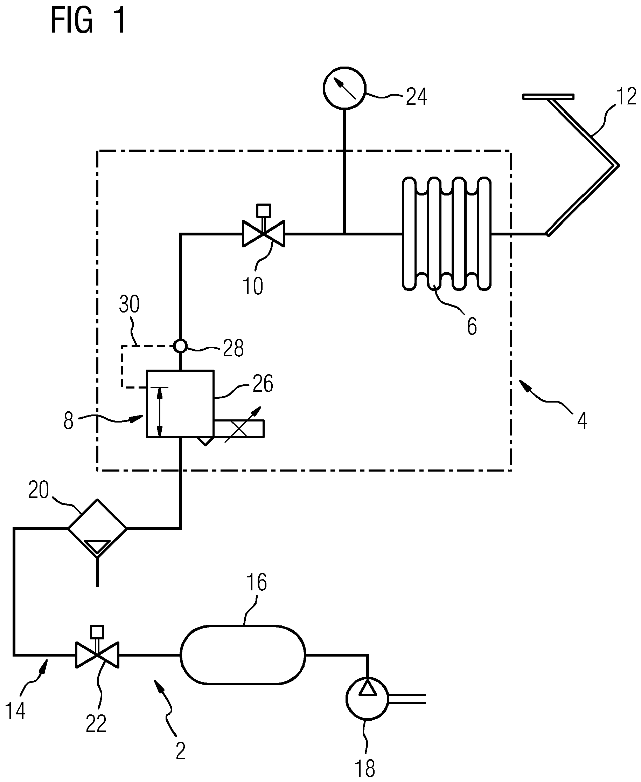

FIG 1 zeigt ein Schaltbild eines Druckluftsystems 2 mit einem Antriebssystem 4, welches einen Antrieb 6 und eine Antriebssteuerung 8 umfasst. Das Antriebssystem 4 umfasst zudem ein elektropneumatisch betätigbares Ventil 10, das zwischen dem Antrieb 6 und der Antriebssteuerung 8 angeordnet ist und zum pneumatischen Trennen des Antriebs 6 von der Antriebssteuerung 8 vorbereitet ist.

Der Antrieb 6 ist als ein Stromabnehmerantrieb ausgeführt, der zum Anheben und/oder Absenken eines schematisch dargestellten Stromabnehmers 12 eines in FIG 1 nicht dargestellten Schienenfahrzeugs vorbereitet ist.

Der Stromabnehmerantrieb ist als ein Luftfederbalg ausgestaltet, welcher in FIG 1 schematisch dargestellt ist. Der Luftfederbalg ist zu einer Einnahme mehrerer eingangsdruckabhängiger, kontinuierlich einstellbarer Stellungen vorbereitet.

Das Antriebssystem 4 ist über ein Druckluftleitungssystem 14 eingangsseitig mit einem Druckluftspeicher 16 verbunden, der ein Volumen von 25 l fasst. Der Druckluftspeicher 16 wiederum ist über das Druckluftleitungssystem 14 eingangsseitig mit einem Kompressor 18 verbunden, der zu einer Versorgung des Druckluftspeichers 16 mit Druckluft vorbereitet ist.

Die Antriebssteuerung 8 ist über das Druckluftleitungssystem 14 eingangsseitig mit einem Öl-/Wasserabscheider 20 verbunden, der unmittelbar vor einem Eingang der Antriebssteuerung 8 zwischen dem Druckluftspeicher 16 und der Antriebssteuerung 8 angeordnet ist. Der Öl-/Wasserabscheider 20 ist zu einem Abtrennen von Öl und/oder Wasser aus einem Gemisch von Öl und/oder Wasser und Druckluft sowie zu einem automatischen Ablassen des gesammelten Öls und/oder Wassers vorbereitet.

Das Druckluftleitungssystem 14 weist ein weiteres elektropneumatisch betätigbares Ventil 22 auf, das unmittelbar hinter einem Ausgang des Druckluftspeichers 16 zwischen der Antriebssteuerung 8 und dem Druckluftspeicher 16 angeordnet ist und zum pneumatischen Trennen der Antriebssteuerung 8 von dem Druckluftspeicher 16 vorbereitet ist.

Ein Druckmessgerät 24 ist über das Druckluftleitungssystem 14 mit dem Antrieb 6 verbunden, wobei das Druckmessgerät 24 unmittelbar vor einem Eingang des Antriebs 6 angeordnet ist. Das Druckmessgerät 24 ist zu einer Übertragung eines elektrischen Signals, das von einem mit dem Druckmessgerät 24 gemessenen Druck abhängig ist, an ein in FIG 1 nicht dargestelltes Anzeigeelement vorbereitet.

Die Antriebssteuerung 8 ist über ein Steuern eines Eingangsdrucks des Antriebs 6 zum Steuern von Betriebszuständen des Antriebs 6 vorbereitet. Insbesondere ist die Antriebssteuerung 8 zum Steuern des Antriebs 6 von einem ersten regulären in einen zweiten regulären Betriebszustand durch ein Ablassen von Druckluft vorbereitet. Ferner ist die Antriebssteuerung 8 als eine Regeleinheit ausgeführt, die ein Drucksteuerventil 26, einen Sensor 28 und eine Rückkopplung 30 zu einem Eingang der Regeleinheit umfasst.

Der Sensor 28 der Regeleinheit ist zu einem Messen des Eingangsdrucks des Antriebs 6 vorbereitet. Des Weiteren ist das Drucksteuerventil 26 zu einem stufenlosen, elektrischen Einstellen des Eingangsdrucks des Antriebs 6 vorbereitet.

Bei einem fahrenden Schienenfahrzeug mit einem Druckluftsystem 2 der in FIG 1 dargestellten Art befinden sich das Ventil 10 des Antriebssystems 4 sowie das Ventil 22 zwischen dem Druckluftspeicher 16 und der Antriebssteuerung 8 jeweils in einer Stellung, in der eine Druckluftströmung von dem Druckluftspeicher 16 über die Antriebssteuerung 8 zu dem Antrieb 6 ermöglicht wird.

Während der Fahrt ist der Stromabnehmer 12 des Schienenfahrzeugs in Kontakt mit einer Strom führenden Leitung. Ferner erfolgt durch die Antriebssteuerung 8 eine Regelung des Eingangsdrucks des Antriebs 6. Abhängig von äußeren Einflüssen, die eine Zu- oder Abnahme des Drucks im Antrieb 6 hervorrufen, wird dabei über die Antriebssteuerung 8 Druckluft abgelassen oder dem Antrieb 6 weitere Druckluft zugeführt. Dadurch wird sichergestellt, dass im Antrieb 6 ein konstanter Druck herrscht, der über die Antriebssteuerung 8 eingestellt werden kann. Folglich wird der Stromabnehmer 12 mit einer konstanten Kraft gegen eine Strom führende Leitung gepresst.

Zum Abstellen des Schienenfahrzeugs wird das Schienenfahrzeug bis zu seinem Stillstand abgebremst. Anschließend wird das Ventil 10 des Antriebssystems 4 in eine Stellung gebracht, in der es den Antrieb 6 pneumatisch von der Antriebssteuerung 8 trennt. Der Stromabnehmer 12 bleibt dabei in Kontakt mit der Strom führenden Leitung.

Durch das pneumatische Trennen des Antriebs 6 von der Antriebssteuerung 8 wird ein Druckluftverlust über die Antriebssteuerung, der auf einen von außen hervorgerufenen Überdruck in dem Antrieb zurückzuführen ist, vermieden. Dadurch kann ohne eine zusätzliche Zufuhr von Druckluft zum Antrieb 6 über einen relativ langen Zeitraum ein hoher Druck im Antrieb 6 aufrechterhalten werden. Folglich kann der Stromabnehmer 12 ohne eine zusätzliche Zufuhr von Druckluft über einen relativ langen Zeitraum in Kontakt mit der Strom führenden Leitung bleiben.

Wird zusätzlich mit Hilfe des Ventils 22, das zwischen der Antriebssteuerung 8 und dem Druckluftspeicher 16 angeordnet ist, die Antriebssteuerung 8 pneumatisch von dem Druckluftspeicher 16 getrennt, können Druckluftverluste aus dem Druckluftspeicher 16, die insbesondere durch Lecks in einer Druckluftleitung zwischen dem Druckluftspeicher 16 und der Antriebssteuerung 8 verursacht werden, reduziert werden.

Nach einer langen Standzeit des Schienenfahrzeugs kann der Druck in dem Antrieb 6, z.B. aufgrund von Lecks, auf einen Wert absinken, bei dem ein ununterbrochener Kontakt des Stromabnehmers 12 mit der Strom führenden Leitung nicht mehr gegeben ist. Mit Hilfe des Druckmessgeräts 24 kann Wartungs- und/oder Bedienpersonal in regelmäßigen Abständen prüfen, ob dies der Fall ist.

Um den Druck in dem Antrieb 6 wieder so weit zu erhöhen, dass ein ununterbrochener Kontakt des Stromabnehmers 12 mit der Strom führenden Leitung wiederhergestellt wird, werden das Ventil 10 des Antriebssystems 4 sowie das Ventil 22 zwischen dem Druckluftspeicher 16 und der Antriebssteuerung 8 erneut in eine Stellung gebracht, in der eine Druckluftströmung von dem Druckluftspeicher 16 über die Antriebssteuerung 8 zu dem Antrieb 6 ermöglicht wird.

Diese Handlung kann von dem Wartungs- und/oder Bedienpersonal ausgelöst werden. Alternativ kann das Druckmessgerät 24 zu einer Übertragung eines elektrischen Signals, das von dem Eingangsdruck des Antriebs 6 abhängig ist, an das elektropneumatisch betätigbare Ventil 10 des Antriebssystems 4 sowie an das Ventil 22 zwischen dem Druckluftspeicher 16 und der Antriebssteuerung 8 vorbereitet sein. Beide Ventile können derart ausgestaltet sein, dass sie zu einer Betätigung mittels des elektrischen Signals vom Druckmessgerät 24 vorbereitet sind. Hierdurch kann eine automatische Betätigung beider Ventile ohne ein Eingreifen von Wartungs- und/oder Bedienpersonal erfolgen. Zweckmäßigerweise werden dabei beide Ventile in eine Stellung gebracht, in der eine Druckluftströmung von dem Druckluftspeicher 16 über die Antriebssteuerung 8 zu dem Antrieb 6 ermöglicht wird, sobald der vom Druckmessgerät 24 gemessene Druck einen vorgegebenen Wert unterschreitet.

Ist soviel Druckluft zum Antrieb 6 geströmt, dass der Eingangsdruck des Antrieb 6 wieder so weit angestiegen ist, dass ein ununterbrochener Kontakt des Stromabnehmers 12 mit der Strom führenden Leitung wiederhergestellt ist, kann das Ventil 10 des Antriebssystems 4 erneut in eine Stellung gebracht werden, in der es den Antrieb 6 pneumatisch von der Antriebssteuerung 8 trennt. Entsprechend kann auch das Ventil 22 zwischen dem Druckluftspeicher 16 und der Antriebssteuerung 8 erneut in eine Stellung gebracht werden, in der es die Antriebssteuerung 8 pneumatisch von dem Druckluftspeicher 16 trennt.

Auch diese Handlungen können von Wartungs- und/oder Bedienpersonal ausgelöst werden. Alternativ können beide Ventile automatisch mittels des elektrischen Signals vom Druckmessgerät 24 in die entsprechenden Stellungen gebracht werden, sobald der vom Druckmessgerät 24 gemessene Druck einen vorgegebenen Wert überschreitet.

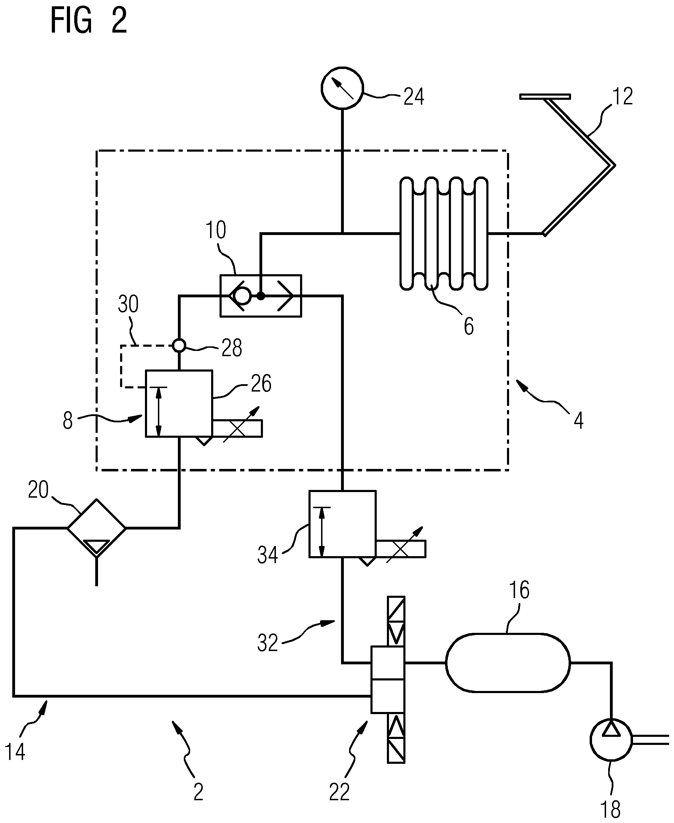

FIG 2 zeigt ein Schaltbild eines Druckluftsystems gemäß Anspruch 1, bei dem es sich um eine Weiterbildung des in FIG 1 dargestellten Druckluftsystems 2 handelt.

Die nachfolgende Beschreibung beschränkt sich jeweils im Wesentlichen auf die Unterschiede zu den vorhergehenden Ausführungsbeispielen, auf die bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Das Druckluftsystem 2 unterscheidet sich von dem in FIG 1 dargestellten Druckluftsystem 2 dadurch, dass das in FIG 2 dargestellten Druckluftsystem 2 einen Bypass 32 aufweist, der im Zustand einer pneumatischen Trennung der Antriebssteuerung 8 von dem Antrieb 6 zu einer Überbrückung der Antriebssteuerung 8 vorbereitet ist.

Damit der Antrieb 6 bei einer Überbrückung der Antriebssteuerung 8 mit Hilfe des Bypasses 32 mit einem einstellbaren Eingangsdruck beaufschlagt werden kann, weist der Bypass 32 eine Hilfssteuerung 34 auf, die zum Steuern des Eingangsdrucks des Antriebs 6 vorbereitet ist. Die Hilfssteuerung 34 ist als ein weiteres Drucksteuerventil ausgeführt, das zu einem Ablassen von Druckluft sowie zu einem stufenlosen, elektrischen Einstellen des Eingangsdrucks des Antriebs 6 vorbereitet ist.

Damit im Zustand der pneumatischen Trennung des Antriebs 6 von der Antriebssteuerung 8 über die Hilfssteuerung 34 bei einem Überdruck in dem Antrieb 6 geringere Druckluftverluste auftreten, als bei gleichem Überdruck und gleicher Dauer des Überdrucks über die Antriebssteuerung 8 auftreten würden, weist die Hilfssteuerung 34 eine geringere Steuergenauigkeit als die Antriebssteuerung 8 auf.

Ferner unterscheidet sich das Druckluftsystem 2 von dem in FIG 1 dargestellten Druckluftsystem dadurch, dass bei dem in FIG 2 dargestellten Druckluftsystem 2 das Ventil 10 des Antriebssystems 4 als ein pneumatisch betriebenes Wechselventil mit zwei Eingängen, einem Ausgang und einer Kugel als Absperrkörper ausgeführt ist. Das Wechselventil ist zum pneumatischen Trennen des Antriebs 6 von der Antriebssteuerung 8 vorbereitetet.

Des Weiteren unterscheidet sich das Druckluftsystem 2 von dem in FIG 1 dargestellten Druckluftsystem 2 dadurch, dass bei dem in FIG 2 dargestellten Druckluftsystem 2 das Ventil 22 zwischen dem Druckluftspeicher 16 und der Antriebssteuerung 8 als ein Wegeventil mit einem Eingang und zwei Ausgängen ausgeführt ist, das elektropneumatisch betätigbar ist.

Der Bypass 32 ist ausgangsseitig über das Wechselventil mit dem Antrieb 6 und eingangsseitig über das Wegeventil mit dem Druckluftspeicher 16 verbunden.

Der Ausgang des Wechselventils ist über das Druckluftleitungssystem 14 mit dem Antrieb 6 verbunden. Einer der zwei Eingänge des Wechselventils ist mit dem Bypass 32 verbunden, während der andere der zwei Eingänge des Wechselventils über das Druckluftleitungssystem 14 mit der Antriebssteuerung 8 verbunden ist. Der Eingang des Wegeventils ist über das Druckluftleitungssystem 14 mit dem Druckluftspeicher 16 verbunden. Einer der zwei Ausgänge des Wegeventils ist mit dem Bypass 32 verbunden, während der andere der zwei Ausgänge des Wegeventils über das Druckluftleitungssystem 14 mit der Antriebssteuerung 8 verbunden ist.

Zum pneumatischen Trennen des Antriebs 6 von der Antriebssteuerung 8, wird das Wegeventil in eine Stellung gebracht, in der eine Druckluftströmung von dem Druckluftspeicher 16 zu der Hilfssteuerung 34 ermöglicht wird, und über die Antriebssteuerung 8 so viel Druckluft abgelassen, dass zwischen der Hilfssteuerung 34 und dem Wechselventil ein höherer Druck herrscht als zwischen der Antriebssteuerung 8 und dem Wechselventil. Dadurch wird das Wechselventil von einer Druckluftversorgung des Antriebs 6 über die Antriebssteuerung 8 zu einer Druckluftversorgung des Antriebs 6 über die Hilfssteuerung 34 umgeschaltet.

Im Zustand der pneumatischen Trennung des Antriebs 6 von der Antriebssteuerung 8 kann der Antrieb 6 weiterhin über den Druckluftspeicher 16 mit Druckluft versorgt werden, wobei über die Hilfssteuerung 34 aufgrund ihrer geringeren Steuergenauigkeit geringere Druckluftverluste bei einem Überdruck in dem Antrieb 6 auftreten, als unter gleichen Bedingungen über die Antriebssteuerung 8 auftreten würden. Dies ermöglicht, den Zeitraum, über den ein hoher Druck im Antrieb 6 aufrechterhalten werden kann, gegenüber dem Fall, bei dem lediglich der Antrieb 6 von der Antriebssteuerung 8 pneumatisch getrennt wird, weiter zu verlängern. Gleichzeitig bleibt weiterhin ein Steuern des Antriebs 6 möglich.

Zum Wechseln in einen normalen Regelbetrieb, bei dem der Eingangsdruck des Antriebs 6 über die als Regeleinheit ausgeführte Antriebsteuerung 8 geregelt wird, wird das Wegeventil in eine Stellung gebracht, in der eine Druckluftströmung von dem Druckluftspeicher 16 zu der Antriebssteuerung 8 ermöglicht wird. Dann wird durch das Ablassen von Druckluft über die Hilfssteuerung 34 der Druck zwischen der Hilfssteuerung 34 und dem Wechselventil so weit abgesenkt, dass der Druck einen niedrigeren Wert als der Druck zwischen der Antriebssteuerung 8 und dem Wechselventil annimmt. Dadurch wird das Wechselventil von einer Druckluftversorgung des Antriebs 6 über die Hilfssteuerung 34 zu einer Druckluftversorgung des Antriebs 6 über die Antriebssteuerung 8 umgeschaltet.

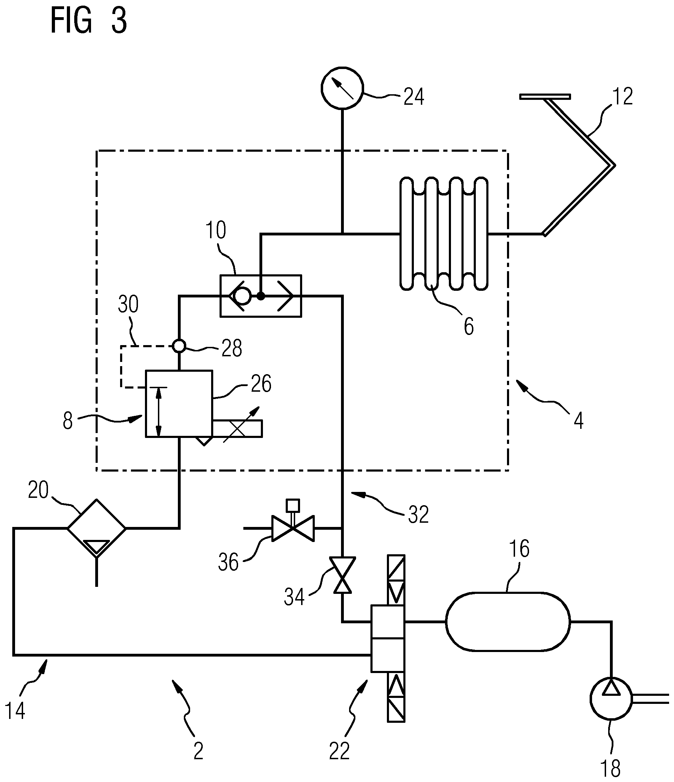

FIG 3 zeigt ein Schaltbild eines weiteren Druckluftsystems 2, bei dem es sich um eine Weiterbildung des in FIG 1 dargestellten Druckluftsystems 2 handelt.

Das Druckluftsystem 2 unterscheidet sich von dem in FIG 2 dargestellten Druckluftsystem 2 dadurch, dass bei dem in FIG 3 dargestellten Druckluftsystem 2 die Hilfssteuerung 34 als ein Druckminderer ausgeführt ist. Ferner weist der Bypass 32 ein Ablassventil 36 auf, das zu einem Ablassen von Druckluft aus dem Bypass 32 vorbereitet ist und elektropneumatisch betätigbar ist.

Zum pneumatischen Trennen des Antriebs 6 von der Antriebssteuerung 8, wird wie bei dem in FIG 2 dargestellten Druckluftsystem 2 verfahren. Im Zustand der pneumatischen Trennung kann der Antrieb 6 weiterhin über den Druckluftspeicher 16 mit Druckluft versorgt werden, wobei über die als Druckminderer ausgeführte Hilfssteuerung 34 bei einem Überdruck in dem Antrieb 6 praktisch keine Druckluftverluste auftreten. Dies ermöglicht, den Zeitraum, über den ein hoher Druck im Antrieb 6 aufrechterhalten werden kann, gegenüber dem Fall, bei dem lediglich der Antrieb 6 von der Antriebssteuerung 8 pneumatisch getrennt wird, weiter zu verlängern.

Zum Wechseln in einen normalen Regelbetrieb, bei dem der Eingangsdruck des Antriebs 6 über die als Regeleinheit ausgeführte Antriebsteuerung 8 geregelt wird, wird das Wegeventil in eine Stellung gebracht, in der eine Druckluftströmung von dem Druckluftspeicher 16 zu der Antriebssteuerung 8 ermöglicht wird. Dann wird durch das Ablassen von Druckluft mittels des Ablassventils 36 der Druck zwischen der Hilfssteuerung 34 und dem Wechselventil so weit abgesenkt, dass der Druck einen niedrigeren Wert als der Druck zwischen der Antriebssteuerung 8 und dem Wechselventil annimmt. Dadurch wird das Wechselventil von einer Druckluftversorgung des Antriebs 6 über die Hilfssteuerung 34 zu einer Druckluftversorgung des Antriebs 6 über die Antriebssteuerung 8 umgeschaltet.

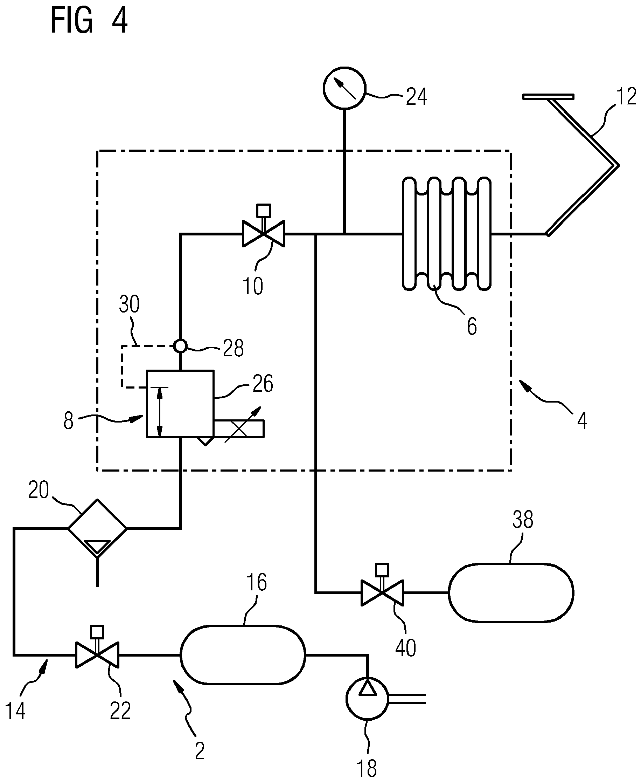

FIG 4 zeigt ein Schaltbild eines alternativen Druckluftsystems 2, bei dem es sich um eine Weiterbildung des in FIG 1 dargestellten Druckluftsystems 2 handelt.

Das Druckluftsystem 2 unterscheidet sich von dem in FIG 1 dargestellten Druckluftsystem 2 dadurch, dass bei dem in FIG 4 dargestellten Druckluftsystem 2 ein weiterer Druckluftspeicher 38 über das Druckluftleitungssystem 14 mit dem Antrieb 6 verbunden ist.

Der weitere Druckluftspeicher 38 ist über das Druckluftleitungssystem 14 mit dem Antrieb 6 zu dessen Versorgung mit Druckluft im Zustand der pneumatischen Trennung der Antriebssteuerung 8 von dem Antrieb 6 verbunden. Der weitere Druckluftspeicher 38 fasst ein Volumen von 10 l.

Ferner ist der weitere Druckluftspeicher 38 über das Druckluftleitungssystem 14 ausgangsseitig des Ventils 10 des Antriebsystems 4 mit dem Antrieb 6 verbunden. Der weitere Druckluftspeicher 38 und der Antrieb 6 sind dabei in einer Parallelschaltung über das Druckluftleitungssystem 14 mit der Antriebssteuerung 8 verbunden.

Außerdem weist das Druckluftleitungssystem 14 ein weiteres elektropneumatisch betätigbares Ventil 40 auf. Dieses Ventil 40 ist zwischen dem weiteren Druckluftspeicher 38 und dem Antrieb 6 angeordnet. Das Ventil ist zum pneumatischen Trennen des weiteren Druckluftspeichers 38 von dem Antrieb 6 vorbereitet.

Zum Auffüllen des weiteren Druckluftspeichers 38 wird sowohl das Ventil 10 des Antriebssystems 4 als auch das Ventil 40 zwischen dem weiteren Druckluftspeicher 38 und dem Antrieb 6 in eine Stellung gebracht, in der eine Druckluftströmung von dem Druckluftspeicher 16 zu dem weiteren Druckluftspeicher 38 ermöglicht wird.

Wird das Ventil 10 des Antriebssystems 4 in eine Stellung gebracht, in der es den Antrieb 6 pneumatisch von der Antriebssteuerung 8 trennt, kann der Antrieb 6 über den weiteren Druckluftspeicher 38 mit Druckluft versorgt werden. Dazu wird das Ventil 40 zwischen dem weiteren Druckluftspeicher 38 und dem Antrieb 6 in eine Stellung gebracht, in der eine Druckluftströmung von dem weiteren Druckluftspeicher 38 zu dem Antrieb 6 ermöglicht wird. Dadurch kann der Zeitraum, über den ein hoher Druck im Antrieb 6 aufrechterhalten werden kann, gegenüber dem Fall, bei dem lediglich der Antrieb 6 von der Antriebssteuerung 8 pneumatisch getrennt wird, weiter verlängert werden.

Im normalen Regelbetrieb, bei dem der Eingangsdruck des Antriebs 6 über die als Regeleinheit ausgeführte Antriebsteuerung 8 geregelt wird, wird das Ventil 40 zwischen dem weiteren Druckluftspeicher 38 und dem Antrieb 6 in eine Stellung gebracht, in der der weitere Druckluftspeicher 38 pneumatisch von dem Antrieb 6 getrennt wird. Dadurch kann erreicht werden, dass eine aus einem Verbinden des weiteren Druckluftspeichers 38 mit dem Antrieb 6 resultierende Veränderung einer Regeldynamik der Antriebsteuerung 8 gering gehalten wird.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Druckluftsystem (2) für ein Schienenfahrzeug, mit einem Druckluftspeicher (16), einem Druckluftleitungssystem (14) und einem über das Druckluftleitungssystem (14) eingangsseitig mit dem Druckluftspeicher (16) verbundenen Antriebssystem (4) mit einem als ein Stromabnehmerantrieb ausgeführten Antrieb (6) zum Anheben und/oder Absenken eines Stromabnehmers (12) des Schienenfahrzeugs in Abhängigkeit eines von einer Antriebssteuerung (8) gesteuerten Eingangsdrucks,
wobei das Druckluftleitungssystem (14) einen Bypass (32) zwischen dem Druckluftspeicher (16) und dem Antrieb (6) aufweist, der im Zustand der pneumatischen Trennung der Antriebssteuerung (8) von dem Antrieb (6) zu einer Überbrückung der Antriebssteuerung (8) vorbereitet ist,
**dadurch gekennzeichnet, dass**
das Antriebssystem (4) ein pneumatisch gesteuertes Wechselventil (10) aufweist, das zum pneumatischen Trennen der Antriebssteuerung (8) von dem Antrieb (6) vorbereitet ist, wobei die Antriebssteuerung (8) und der Bypass (32) ausgangsseitig jeweils mit einem Eingang des Wechselventils (10) verbunden sind und ein Ausgang des Wechselventils (10) mit dem Antrieb (6) verbunden ist, und wobei die Antriebssteuerung (8) und der Bypass (32) eingangsseitig jeweils mit einem Ausgang eines Wegeventils (22) verbunden sind, dessen Eingang mit dem Druckluftspeicher (16) verbunden ist.

2. Druckluftsystem (2) nach Anspruch 1,
**dadurch gekennzeichnet, dass**
die Antriebssteuerung (8) als eine Regeleinheit ausgeführt ist, die einen Sensor (28), der zum Messen einer Regelgröße des Antriebs (6) vorbereitet ist, sowie eine Rückkopplung (30) zu einem Eingang der Regeleinheit aufweist.

3. Druckluftsystem (2) nach Anspruch 1,
**dadurc hgekennzeichnet**, dass
der Bypass (32) eine Hilfssteuerung (34) aufweist, die zum Steuern des Eingangsdrucks des Antriebs (6) vorbereitet ist.

4. Druckluftsystem (2) nach Anspruch 3,
**dadurch gekennzeichnet, dass**
die Hilfssteuerung (34) als ein Drucksteuerventil oder als ein Druckminderer ausgeführt ist.

5. Druckluftsystem (2) nach einem der vorhergehenden Ansprüche,
**dadurch gekennzeichnet, dass**
ein Druckmessgerät (24) über das Druckluftleitungssystem (14) mit dem Antrieb (6) verbunden ist und das Druckmessgerät (24) unmittelbar vor einem Eingang des Antriebs (6) angeordnet ist.

6. Schienenfahrzeug,
**dadurch gekennzeichnet, dass**
es ein Druckluftsystem nach einem der Ansprüche 1 bis 5 aufweist.

7. Schienenfahrzeug nach Anspruch 6,
**dadurch gekennzeichnet, dass**
die Antriebssteuerung (8) pneumatisch von dem Antrieb (6) mittels des Wechselventils (10) bei Abstellen des Schienenfahrzeugs getrennt wird, wobei der Stromabnehmer des Schienenfahrzeugs weiterhin in Kontakt mit einer stromführenden Leitung bleibt.

## Claims

1. Compressed air system (2) for a rail-borne vehicle, having a compressed air reservoir (16), a compressed air line system (14) and a drive system (4) that is connected on the inlet side to the compressed air reservoir (16) by way of the compressed air line system (14), said drive system having a drive (6) embodied as a current collector drive to raise and/or lower a current collector (12) of the rail-borne vehicle in dependence upon an inlet pressure, said inlet pressure being controlled by a drive controller (8), wherein the compressed air line system (14) comprises a bypass (32) between the compressed air reservoir (16) and the drive (6) that is provided so as to bridge the drive controller (8) when in the state in which the drive controller (8) is pneumatically separated from the drive (6),
**characterized in that**
the drive system (4) has a pneumatically controlled shuttle valve (10) which is provided for pneumatically separating the drive controller (8) from the drive (6), wherein the drive controller (8) and the bypass (32) are connected on the outlet side in each case to an inlet of the shuttle valve (10), and an outlet of the shuttle valve (10) is connected to the drive (6), and wherein the drive controller (8) and the bypass (32) are connected on the inlet side in each case to an outlet of a directional control valve (22), the inlet of which is connected to the compressed air reservoir (16).

2. Compressed air system (2) according to Claim 1,
**characterized in that**
the drive controller (8) is embodied as a control unit that comprises a sensor (28) that is provided so as to measure a control variable of the drive (6), and also a feedback (30) to an inlet of the control unit.

3. Compressed air system (2) according to Claim 1,
**characterized in that**
the bypass (32) comprises an auxiliary controller (34) that is provided so as to control the inlet pressure of the drive (6).

4. The compressed air system (2) according to Claim 3,
**characterized in that**
the auxiliary controller (34) is embodied as a pressure control valve or as a pressure reducer.

5. Compressed air system (2) according to any one of the preceding claims,
**characterized in that**
a pressure measuring device (24) is connected to the drive (6) by way of the compressed air line system (14) and the pressure measuring device (24) is arranged directly upstream of an inlet of the drive (6).

6. Rail-borne vehicle,
**characterized in that**
it has a compressed air system according to any one of Claims 1 to 5.

7. Rail-borne vehicle according to Claim 6,
**characterized in that**
the drive controller (8) is pneumatically separated from the drive (6) by means of the shuttle valve (10) when the rail vehicle is parked, wherein the current collector of the rail-borne vehicle furthermore remains in contact with a line that is conducting current.

## Revendications

1. Système (2) à air comprimé d'un véhicule ferroviaire, comprenant un réservoir (16) d'air comprimé, un système (14) de conduite d'air comprimé et un système (4) d'entraînement relié, par l'intermédiaire du système (14) de conduite d'air comprimé du côté de l'entrée, au réservoir (16) d'air comprimé et ayant un entraînement (6), réalisé en entraînement d'appareil de prise de courant, pour lever et/ou abaisser un appareil (12) de prise de courant du véhicule ferroviaire en fonction d'une pression d'entrée commandée par une commande (8) d'entraînement, le système (14) de conduite d'air comprimé ayant une dérivation (32) entre le réservoir (16) d'air comprimé et l'entraînement (6), qui, dans l'état où la commande (8) d'entraînement est séparée de l'entraînement (6), met la commande (8) d'entraînement en dérivation,
**caractérisé en ce que**
le système (4) d'entraînement a une soupape (10) à deux voies, commandée pneumatiquement, qui procure la séparation pneumatique du dispositif (8) d'entraînement de l'entraînement (6), la commande (8) d'entraînement et la dérivation (32) étant reliées du côté de la sortie, respectivement, à une entrée de la soupape (10) à deux voies, et une sortie de la soupape (10) à deux voies étant reliée à l'entraînement (6), la commande (8) d'entraînement et la dérivation (32) étant reliées du côté de l'entrée, respectivement, à une sortie d'une soupape (22) à plusieurs voies, dont l'entrée est reliée au réservoir (16) d'air comprimé.

2. Système (2) à air comprimé suivant la revendication 1,
**caractérisé en ce que**
la commande (8) d'entraînement est réalisée sous la forme d'une unité de régulation, qui a un capteur (28) procurant la mesure d'une grandeur de régulation de l'entraînement (6), ainsi qu'une réaction (30) vers une entrée de l'unité de régulation.

3. Système (2) à air comprimé suivant la revendication 1,
**caractérisé en ce que**
la dérivation (32) a une commande (34) auxiliaire, qui procure la commande de la pression d'entrée de l'entraînement (6).

4. Système (2) à air comprimé suivant la revendication 3,
**caractérisé en ce que**
la commande (34) auxiliaire est réalisée sous la forme d'une soupape de commande de la pression ou sous la forme d'un détendeur.

5. Système (2) à air comprimé suivant l'une des revendications précédentes,
**caractérisé en ce qu'**
un appareil (24) de mesure de la pression est relié à l'entraînement (6) par le système (14) de conduite d'air comprimé et l'appareil (24) de mesure de la pression est monté directement avant une entrée de l'entraînement (6).

6. Véhicule ferroviaire,
**caractérisé en ce qu'**
il a un système à air comprimé suivant l'une des revendications 1 à 5.

7. Véhicule ferroviaire suivant la revendication 6,
**caractérisé en ce que**
la commande (8) d'entraînement est séparée pneumatiquement de l'entraînement (6) au moyen de la soupape (10) à deux voies lorsque le véhicule ferroviaire est à l'arrêt, l'appareil de prise de courant du véhicule ferroviaire continuant à rester en contact avec une ligne de courant.
